# EUROPÄISCHE PATENTSCHRIFT

(11) **EP 3 728 399 B1**
(45) Veröffentlichungstag und Bekanntmachung des Hinweises auf die Patenterteilung: **18.08.2021**
(21) Anmeldenummer: 18814643.5
(22) Anmeldetag: 12.12.2018
(51) Int. Cl.: C08G 64/30, C08G 64/24

(54) **VERFAHREN ZUR HERSTELLUNG EINES POLYCARBONATS UNTER VERWENDUNG EINES ORGANISCHEN LÖSUNGSMITTELS AUF DER GRUNDLAGE VON CHLORKOHLENWASSERSTOFFEN**
METHOD FOR PRODUCING A POLYCARBONATE USING AN ORGANIC SOLVENT BASED ON HYDROCHLOROCARBON
PROCÉDÉ DE PRÉPARATION D'UN POLYCARBONATE À L'AIDE D'UN SOLVANT ORGANIQUE À BASE D'HYDROCARBURES CHLORÉS

(30) Priorität: 18.12.2017 EP 17207886; 23.11.2018 EP 18208001
(43) Veröffentlichungstag der Anmeldung: 28.10.2020
(73) Patentinhaber: Covestro Intellectual Property GmbH & Co. KG, 51373 Leverkusen (DE)
(72) Erfinder: HEIJL, Jan, 9160 Lokeren (BE); SLUYTS, Erik, 2930 Brasschaat (BE); YAO, Xiaoxin, Shanghai, 201199 (CN)
(74) Vertreter: Levpat
(86) Internationale Anmeldenummer: PCT/EP2018/084579
(87) Internationale Veröffentlichungsnummer: WO 2019/121248

(56) Entgegenhaltungen:
- EP-A2- 0 520 272
- WO-A2-2015/119981
- US-A- 4 262 111

## Beschreibung

Gegenstand der vorliegenden Erfindung ist ein Verfahren zur Herstellung eines Polycarbonats aus einem Diphenol oder mehreren verschiedenen Diphenolen und einem Carbonylhalogenid nach dem Phasengrenzflächenverfahren. Das erfindungsgemäße Verfahren zeichnet sich dadurch aus, dass es unter Verwendung eines organischen Lösungsmittels auf der Grundlage eines Chlorkohlenwasserstoffs oder eines Gemischs mehrerer Chlorkohlenwasserstoffe erfolgt.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18, (1980)"; S. 75-90, D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich von Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 beschrieben worden.

Des Weiteren wird auch in EP 0 517 044 A2 oder EP 520 272 A2 das Phasengrenzflächenverfahren zur Herstellung von Polycarbonat beschrieben.

Zur Herstellung von Polycarbonat nach dem Phasengrenzflächenverfahrenwird ein in wässrig-alkalischer Lösung oder Suspension vorgelegtes Dinatriumsalz eines Diphenols oder ein in wässrig-alkalischer Lösung oder Suspension vorgelegtes Gemisch mehrerer verschiedener Diphenole in Gegenwart eines inerten organischen Lösungsmittels oder Lösungsmittelgemisches mit einem Carbonylhalogenid, insbesondere Phosgen umgesetzt, wobei das inerte organische Lösungsmittel Lösungsmittelgemisch neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher (monofunktionelle Phenole) kontrolliert werden kann. Die organische Phase wird schließlich abgetrennt und das Polycarbonat durch verschiedene Aufarbeitungsschritte daraus isoliert. Beispielsweise für Bisphenol A kann die Reaktionen wie folgt dargestellt werden:

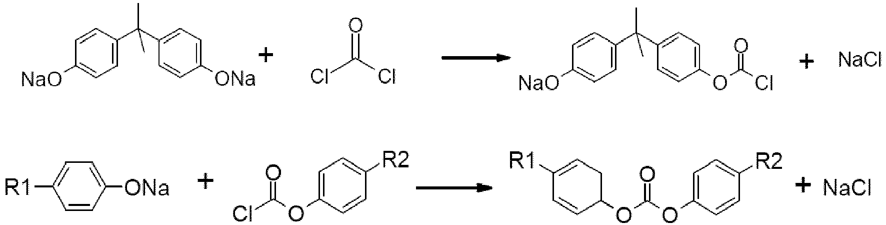

Wobei R1 und R2 unabhängig voneinander wachsende Polycarbonatketten sein können oder Kettenabbrecher.

Kontinuierliche Verfahren zur Herstellung von Kondensaten unter Verwendung von Carbonylhalogeniden, insbesondere Phosgen, - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzlichem Kochsalz oder Alkalicarbonat-Verbindungen - abgebaut. Typischerweise werden für das kontinuierliche Zweiphasen-Grenzflächenverfahren zur Herstellung von aromatischen Polycarbonaten Phosgenüberschüsse um die 20 Mol-% bezogen auf das zugegebene Diphenolat eingesetzt (vgl. D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692).

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte M_{w} (ermittelt durch Messung der relativen Lösungsviskosität bei 25°C in CH₂Cl₂ und einer Konzentration von 0,5 g pro 100 ml CH₂Cl₂) von 18.000 g/mol bis 36.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (2) 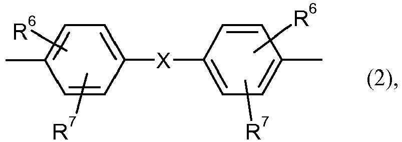 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

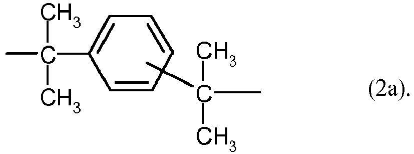

Beispiele für Diphenole (Dihydroxyarylverbindungen) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)-propan (kurz auch Bisphenol A oder BPA genannt), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (kurz auch Bisphenol TMC oder BPTMC genannt).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US 2 999 835 A, US 3 148 172 A, US 2 991 273 A, US 3 271 367 A, US 4 982 014 A und US 2 999 846 A, in den deutschen Offenlegungsschriften DE 1 570 703 A1, DE 2 063 050 A1, DE 2 036 052 A1, DE 2 211 956 A1 und DE 3 832 396 A1, der französischen Patentschrift FR 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr verschiedene Diphenole eingesetzt. Das verwendete Diphenol oder die verwendeten mehreren verschiedenen Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In der gleichen Weise werden eventuell zu verwendende Verzweiger oder Verzweigermischungen der Synthese zugesetzt. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen, wobei die Verzweiger mit den Diphenolen vorgelegt werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Gemäß einem aus EP 0 304 691 A2 bekannten kontinuierlichen Phasengrenzflächenverfahren zur Herstellung von Polycarbonaten wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Der Phosgenüberschuss ist mit 20 bis 100 Mol-% sehr hoch und die Verweilzeit im Reaktionsrohr für den ersten Reaktionsschritt liegt bei 10 bis 75 s. Mit diesem Verfahren können lediglich Prepolymere mit einem Molekulargewicht von 4000 bis 12000 g/mol hergestellt werden. Anschliessend erfolgt zwingend eine weitere Aufkondensierung unter Verwendung mindestens eines Katalysators, um zum gewünschtem Molekulargewicht zu kommen. Geeignete Katalysatoren sind tertiäre Amine und Oniumsalzen. Bevorzugt werden Tributylamin, Triethylamin und N-Ethylpiperidin verwendet.

Der eingesetzte Amin-Katalysator kann offenkettig oder zyklisch sein, besonders bevorzugt sind Triethylamin und N-Ethylpiperidin. Der Katalysator wird vorzugsweise als 1 bis 55 Gew.%-ige Lösung eingesetzt.

Unter Oniumsalzen werden hier Verbindungen wie NR₄X verstanden, wobei R ein Alkyl und/oder Arylrest und/oder ein H sein kann und X ein Anion ist, beispielsweise ein Chlorid-Ion, ein Hydroxid-Ion oder ein Phenolat-Ion.

Das ausreagierte, höchstens noch Spuren an (< 2 ppm) Chlorkohlensäurearylestern enthaltende mindestens zweiphasige Reaktionsgemisch lässt man zur Phasentrennung absitzen. Die wässrige alkalische Phase (Reaktionsabwasser) wird abgetrennt und die organische Phase mit verdünnter Salzsäure und Wasser extrahiert. Die vereinigten Wasserphasen werden der Abwasseraufarbeitung zugeführt, wo Lösungsmittel- und Katalysatoranteile durch Strippen oder Extraktion abgetrennt und rückgeführt werden. Anschließend werden nach der Einstellung eines bestimmten pH-Wertes von z.B. 6 bis 8, z.B. durch Salzsäurezugabe, die gegebenenfalls noch verbleibenden organischen Verunreinigungen wie z.B. Monophenol und/oder nicht umgesetztes Diphenol bzw. nicht umgesetzte Diphenole durch Behandlung mit Aktivkohle entfernt und die Wasserphase der Chloralkalielektrolyse zugeführt.

In einer anderen Variante der Aufarbeitung wird das Reaktionsabwasser nicht mit den Waschphasen vereinigt, aber nach Strippen oder Extraktion zur Abtrennung von Lösungsmitteln und Katalysatorresten, auf einem bestimmten pH-Wert von z.B. 6 bis 8, z.B. durch Salzsäurezugabe eingestellt und nach Abtrennung der noch verbleibenden organischen Verunreinigungen wie z.B. Monophenol und/oder nicht umgesetztes Diphenol oder nicht umgesetzte Diphenole durch Behandlung mit Aktivkohle der Chloralkalielektrolyse zugeführt.

Die Waschphasen können nach Entfernung der Lösungsmittel- und Katalysatoranteile durch Strippen oder Extraktion gegebenenfalls wieder der Synthese zugeführt werden.

Das Carbonylhalogenid, insbesondere Phosgen, kann flüssig, gasförmig oder gelöst in einem inerten Lösungsmittel eingesetzt werden.

Die Herstellung von Phosgen aus Kohlenmonoxid und Chlor ist bekannt, beispielsweise aus EP 0 881 986 A1, EP 1 640 341 A2, DE 332 72 74 A1, GB 583 477 A, WO 97/30932 A1, WO 96/16898 A1, oder US 6,713,035 B1.

Gemäß dem Stand der Technik vorzugsweise verwendbare inerte Lösungsmittel für die Herstellung von Polycarbonaten, sind Lösungsmittel auf der Grundlage von Chlorkohlenwasserstoffen wie beispielsweise Dichlormethan, den verschiedenen Dichlorethanen oder Chlorpropanverbindungen, Chlorbenzol oder Chlortoluol, oder Gemischen aus zwei oder mehr dieser Chlorkohlenwasserstoffe; auch Toluol kann in diesem Zusammenhang als inertes Lösungsmittel dienen. Vorzugsweise wird ein inertes Lösungsmittel auf der Grundlage von Dichlormethan oder einem Gemisch aus Dichlormethan und Chlorbenzol eingesetzt. Im Rahmen der vorliegenden Erfindung werden solche inerten Lösungsmittel oder Gemische von inerten Lösungsmitteln zusammenfassend in der Einzahl "organisches Lösungsmittel" und in der Mehrzahl "organische Lösungsmittel" genannt.

Ein Nachteil der Verfahren aus dem Stand der Technik ist, dass für die Herstellung der Polycarbonate ein organisches Lösungsmittel eingesetzt werden muss, dessen Gehalt an Verunreinigungen sehr gering ist, das also von hoher Reinheit ist, um Polycarbonate erhalten zu können, die den Qualitätsanforderungen entsprechen.

Die von der Reinheit des organischen Lösungsmittels abhängigen Qualitätsanforderungen sind beispielsweise optische Eigenschaften wie der Yellowness Index (YI), der visuelle Eindruck, die Restmenge an freiem Diphenol, also beispielweise die Restmenge an Bisphenol A, wenn Bisphenol A eingesetzt wird, und die Effizienz des End-cappings (phenolisches OH). Sowohl die Restmenge an freiem Diphenol (z.B. < 10 ppm im Falle von Bisphenol A) als auch der Gehalt an phenolischen OH-Endgruppen (< 200 ppm) sollten möglichst niedrig sein.

Insbesondere herrscht im Stand der Technik die Meinung vor, dass das Vorhandensein von Tetrachlormethan die optischen Eigenschaften von Polycarbonaten verschlechtert. Dem entsprechend soll der Gehalt von Tetrachlormethan bei der Herstellung von Polycarbonaten möglichst niedrig gehalten werden.

So offenbart WO 2015 / 119981 A2, dass bei der Herstellung von Phosgen als Nebenprodukt CCl₄ entstehen kann, dass sich mit dem Phosgen in das Verfahren zur Herstellung von PC eingebracht wird. Auch offenbart WO 2015 / 119981 A2, dass der Gehalt an Tetrachlormethan im zur Herstellung der Polycarbonate verwendeten Phosgen maximal 10 ppm betragen dürfe.

Auch der Gehalt an Chlorethan im organischen Lösungsmittel zur Herstellung von Polycarbonaten wird hinsichtlich der optischen Eigenschaften der erhaltenen Polycarbonate kritisch gesehen.

Organische Lösungsmittel mit den erforderlichen hohen Reinheiten zur Verfügung zu stellen, ist aber aufwändig und teuer. So müssen diese organischen Lösungsmittel vor dem Einsatz aufwändig gereinigt oder mit speziellen Verfahren hergestellt werden, organische Lösungsmittel höherer Qualität eingesetzt oder bei Verunreinigung öfter erneuert oder zumindest gereinigt werden. Diese Reinigung kann beispielsweise durch Destillation geschehen, was einen hohen Energieverbrauch bedingt. Die Verunreinigungen müssen dann in speziellen Anlagen entsorgt werden, beispielsweise durch Verbrennen, was ebenfalls aufwändig und teuer ist, insbesondere da dabei Umweltbelastungen zu vermieden sind. Auch führt es häufig zu teuren Betriebsstillständen, wenn auf Grund von Verunreinigungen im organischen Lösungsmittel dieses ausgetauscht werden muss.

Aufgabe der vorliegenden Erfindung ist es daher, ein Verfahren zur Herstellung von Polycarbonat zur Verfügung zu stellen, bei dem bei der Umsetzung eines in der wässrigen Phase gelösten Diphenols oder mehrerer verschiedener in der wässrigen Phase gelösten Diphenole mit einem in einem organischen Lösungsmittel gelösten Carbonylhalogenid zu einem in dem organischen Lösungsmittel gelösten Polycarbonat oder mehreren in dem organischen Lösungsmittel gelösten Polycarbonaten ein organisches Lösungsmittel eingesetzt werden kann, das einen erhöhten Gehalt an chlorhaltigen Verunreinigungen, insbesondere einen erhöhten Gehalt an Tetrachlorkohlenstoff und/oder Chlorethan, aufweist, ohne dass sich die optischen und rheologischen Eigenschaften des Polycarbonats verschlechtern. Insbesondere sollen sich der Yellowness Index, der visuelle Eindruck, und die relative Lösungsviskosität des Polycarbonats nicht verschlechtern. Dabei soll bevorzugt der YI-Wert nicht höher als 2,0, besonders bevorzugt nicht höher als 1,5 sein, ganz besonders bevorzugt nicht höher als 1,2. Der durch Inaugenscheinnahme geprüfte visuelle Eindruck von Proben von erfindungsgemäß hergestelltem Polycarbonat soll gleich gut wie der von Proben von nach dem Stand der Technik hergestellten Polycarbonat sein. Außerdem soll die relative Lösungsviskosität innerhalb des normgerechten Bereichs liegen.

Auch ist es Aufgabe der vorliegenden Erfindung, ein Verfahren zur Herstellung von Polycarbonat zur Verfügung zu stellen, bei dem Betriebsstillstände, die zum Austausch des organischen Lösungsmittels dienen, im Vergleich zum Stand der Technik weniger häufig vorgenommen werden müssen, oder bei dem das organische Lösungsmittel während des Verfahrens nicht aufwändig gereinigt werden muss, oder bei dem das organische Lösungsmittel während des Verfahrens nicht teilweise entnommen und durch eines mit einem verringerten Gehalt an chlorhaltigen Verunreinigungen, insbesondere einem verringerten Gehalt an Tetrachlorkohlenstoff und/oder Chlorethan, ersetzt werden muss.

Es wurde überraschend festgestellt, dass die Aufgabe durch ein Verfahren gemäß Anspruch 1 gelöst wird.

Insbesondere wird die Aufgabe dadurch gelöst, dass bei der Herstellung von Polycarbonaten ein organisches Lösungsmittel auf der Grundlage eines Chlorkohlenwasserstoffs oder mehrerer Chlorkohlenwasserstoffe eingesetzt wird, das einen Gehalt an Tetrachlormethan von 0,05 bis 7 Gew.-% und einen Gehalt an Chlorethan von 0,3 bis 10 Gew. % aufweist.

Bevorzugt ist das organische Lösungsmittel eines auf der Grundlage von Chlorkohlenwasserstoffen ausgewählt aus der Reihe umfassend Methylenchlorid, Chlorbenzol, Chloroform oder Mischungen aus diesen chlorierten Kohlenwasserstoffen.

Außerdem enthält das erfindungsgemäße organische Lösungsmittel noch ein oder mehrere sonstige Komponenten, auch als Nebenkomponenten bezeichnet. Die Nebenkomponenten sind ohne Anspruch auf Vollständigkeit beispielsweise Wasser, Toluol, Styrol, Methanol, Benzol, o-Xylol, oder Tetrachlorethen.

Im Einzelnen umfasst das erfindungsgemäße Verfahren zur Herstellung von Polycarbonaten nach dem Phasengrenzflächenverfahren wenigstens folgende Schritte:
(a) Lösen eines Diphenols oder mehrerer verschiedener Diphenole in einer wässriger Phase und Lösen eines Carbonylhalogenids in einem organischen Lösungsmittel,
(b) Umsetzung des in der wässrigen Phase gelösten Diphenols oder der mehreren verschiedenen in der wässrigen Phase gelösten Diphenole mit dem in dem organischen Lösungsmittel gelösten Carbonylhalogenid zu einem in dem organischen Lösungsmittel gelösten Polycarbonat,
(c) Zuführung dieses in dem organischen Lösungsmittel gelösten Polycarbonats zu Schritt (d),
(d) Abtrennung des in Schritt (b) erhaltenen Polycarbonats vom organischen Lösungsmittel und Rückführung des organischen Lösungsmittels zu Schritt (a),
wobei das organische Lösungsmittel folgende Komponenten aufweist:

| | |
|---|---|
| Methylenchlorid | 0 bis 99,65 Gew.-%, |
| Chlorbenzol | 0 bis 99,65 Gew-% |
| Chloroform | 0 bis 99,65 Gew-% |
| Chlorethan | 0,3 bis 10 Gew.-%, |
| Tetrachlormethan | 0,05 bis 7,0 Gew.-%, |
| sonstige Komponenten | 0 bis 2,0 Gew.-%, |

wobei die Summe der Gehalte von Methylenchlorid, Chlorbenzol und Chloroform mindestens 81,00 Gew.-% und höchstens 99,65 Gew.-% beträgt, und wobei Summe der Gehalte von Methylenchlorid, Chlorbenzol und Chloroform vermehrt um die Summe der Gehalte von Chlorethan, Tetrachlormethan und der sonstigen Komponenten 100 Gew.-% beträgt. Dabei ist in dem organischen Lösungsmittel immer mindestens eine Komponente ausgewählt aus den Komponenten Methylenchlorid, Chlorbenzol und Chloroform enthalten.

Das in Schritt (b) erhaltene Polycarbonat kann nach weiteren Verarbeitungsschritten als Granulat oder als Pulver erhalten werden.

Die Summe der Gehalte von Chlorethan, Tetrachlormethan und sonstigen Komponenten im organischen Lösungsmittel beträgt also mindestens 0,35 Gew.-% und höchstens 19,0 Gew.-%.

Erfindungsgemäß bevorzugt beträgt der Gehalt an Methylenchlorid gegenüber der Summe der Gehalte von Chlorbenzol und Chloroform wenigstens 98,0 Gew.-% bis 99,999 Gew.-%, bevorzugt 99,0 Gew.% bis 99,995 Gew.-%.

Alternativ erfindungsgemäß bevorzugt beträgt die Summe der Gehalte an Methylenchlorid und Chlorbenzol gegenüber dem Gehalt von Chloroform wenigstens 98,0 Gew.-% bis 99,999 Gew.-%, bevorzugt 99,0 Gew.% bis 99,995 Gew.-%.

Dabei ist das Verhältnis des Gehalts an Methylenchlorid gegenüber dem Gehalt an Chlorbenzol von 40 Gew.-% Methylenchlorid zu 60 Gew.-% Chlorbenzol bis 60 Gew.-% Methylenchlorid zu 40 Gew.-% Chlorbenzol,
bevorzugt 45 Gew.-% Methylenchlorid zu 55 Gew.-% Chlorbenzol bis 55 Gew.-% Methylenchlorid zu 45 Gew.-% Chlorbenzol,
besonders bevorzugt 48 Gew.-% Methylenchlorid zu 52 Gew.-% Chlorbenzol bis 52 Gew.-% Methylenchlorid zu 48 Gew.-% Chlorbenzol,
ganz besonders bevorzugt 49 Gew.-% Methylenchlorid zu 51 Gew.-% Chlorbenzol bis 51 Gew.-% Methylenchlorid zu 49 Gew.-% Chlorbenzol,
insbesondere 50 Gew.-% Methylenchlorid zu 50 Gew.-% Chlorbenzol.

Außerdem erfindungsgemäß bevorzugt beträgt der Gehalt von Chlorethan im organischen Lösungsmittel von 0,9 Gew.-% bis 8,0 Gew.-%, bevorzugt von 2,0 Gew-% bis 7,0 Gew.-%, besonders bevorzugt von 2,5 Gew.-% bis 6,0.

Zusätzlich erfindungsgemäß bevorzugt beträgt der Gehalt von Tetrachlormethan im organischen Lösungsmittel von 0,2 Gew.-% bis 7,0 Gew.-%, bevorzugt von 0,5 bis 6,0 Gew.-%, besonders bevorzugt von 1,0 Gew.-% bis 4,0 Gew.-%.

Insbesondere erfindungsgemäß bevorzugt beträgt im organischen Lösungsmittel der Gehalt von Chlorethan von 0,9 Gew.-% bis 8,0 Gew.-% und der Gehalt von Tetrachlormethan von 0,2 Gew.-% bis 7,0 Gew.-%,
bevorzugt der Gehalt von Chlorethan von 2,0 Gew-% bis 7,0 Gew.-% und der Gehalt von Tetrachlormethan von 0,5 bis 6,0 Gew.-%,
besonders bevorzugt der Gehalt von Chlorethan von 2,5 Gew.-% bis 6,0 Gew.-% und der Gehalt von Tetrachlormethan von 1,0 Gew.-% bis 4,0 Gew.-%.

Für alle vorgenannten Fälle gilt, dass die Summe der Gehalte von Methylenchlorid, Chlorbenzol und Chloroform vermehrt um die Summe der Gehalte von Chlorethan, Tetrachlormethan und der sonstigen Komponenten 100 Gew.-% beträgt.

Das erfindungsgemäße Verfahren zeichnet sich bevorzugt weiterhin dadurch aus, dass das organische Lösungsmittel nach der Abtrennung des erhaltenen Polycarbonats vom organischen Lösungsmittel in Schritt (d) ohne weitere Abtrennung von flüssigen oder gasförmigen Bestandteilen wieder Schritt (a) zuführt wird.

Das erhaltene Polycarbonat und das organische Lösungsmittel können in Schritt (d) durch verschiedene Verfahren voneinander getrennt werden.

So kann das erhaltene Polycarbonat und das organische Lösungsmittel dadurch voneinander getrennt werden, dass das erhaltene, in dem organische Lösungsmittel gelöste Polycarbonat in ein weiteres Lösungsmittel gegeben wird, wobei das erhaltene Polycarbonat in diesem weiteren Lösungsmittel schlechter löslich ist als in dem organischen Lösungsmittel und daher das erhaltene Polycarbonat aus der Lösung ausfällt und abgetrennt werden kann. Eine solche Abtrennung ist beispielsweise beschrieben in EP 1339775 A1, EP 0488190 A1, EP 0095670 A2, EP 116836 A2. Dabei wird das Polycarbonat in der Regel als Pulver erhalten.

Alternativ kann das erhaltene Polycarbonat und das organische Lösungsmittel dadurch voneinander getrennt werden, dass in Schritt (d) das organische Lösungsmittel durch mehrstufiges Aufheizen und Entspannen abgetrennt wird, gegebenenfalls in Kombination mit Ausdampfextrudern und/oder Strangverdampfern und/oder Schaumverdampfern. Eine solche Abtrennung ist beispielsweise beschrieben in EP 1094873 A1, EP 1088019 A2, EP 2081975 A1, EP 1165302 A1, EP 03166771 A1, EP 1740638 A1, EP 1265944 A1, EP 1242156 A1. Dabei wird das Polycarbonat in der Regel als Granulat erhalten.

Alternativ kann das erhaltene Polycarbonat und das organische Lösungsmittel dadurch voneinander getrennt werden, dass in Schritt (d) das organische Lösungsmittel durch Sprühtrocknen mit einem Schleppgas, insbesondere Dampf oder Stickstoff, abgetrennt wird. Eine solche Abtrennung ist beispielsweise beschrieben in WO 2002044245 A1, EP 0256003 A1, EP 0003996 A1, EP 0616002 A1, EP 0783011 A2. Dabei wird das Polycarbonat in der Regel als Pulver erhalten.

Das erfindungsgemäße Verfahren zeichnet sich bevorzugt weiterhin dadurch aus, dass nach der Abtrennung des in Schritt (b) erhaltenen Polycarbonats aus dem organischen Lösungsmittel in Schritt (d) aus dem organischen Lösungsmittel nur Komponenten entfernt werden, die einen Siedepunkt größer 135 °C bei Normaldruck (1013,25 hPa) aufweisen, ohne Abtrennung von Komponenten, die einen Siedepunkt von kleiner oder gleich 135 °C bei Normaldruck (1013,25 hPa) aufweisen, wobei die Komponenten, die einem Siedepunkt von kleiner oder gleich 135 °C bei Normaldruck (1013,25 hPa) aufweisen, wieder Schritt (a) zugeführt werden, und die Komponenten, die einem Siedepunkt von größer 135 °C bei Normaldruck (1013,25 hPa) aufweisen, einer Verbrennung oder anderweitigen Entsorgung zugeführt werden.

Das erfindungsgemäße Verfahren zeichnet sich weiterhin dadurch aus, dass das organische Lösungsmittel in einem in Bezug auf dieses Lösungsmittel geschlossenen Kreislauf geführt wird. Dabei wird die Masse des Lösungsmittels während der Durchführung des Verfahrens nicht vermehrt, vorzugsweise konstant gehalten.

Erfindungsgemäß bevorzugt werden erst nach einer zeitlichen Periode, in der pro Massenanteil des organischen Lösungsmittels 500 bis 7.500, bevorzugt 1.000 bis 5.000, besonders bevorzugt 1.250 bis 3.000 Massenanteile des Polycarbonats gemäß den Schritten (a) bis (d) hergestellt werden, 100 % oder weniger, bevorzugt 70 % oder weniger, besonders bevorzugt 50 % oder weniger, ganz besonders bevorzugt 30 % oder weniger des organischen Lösungsmittels ersetzt oder aufgereinigt.

Dadurch kann die Zeit zwischen zwei Betriebsstillständen zum Austausch des organischen Lösungsmittels gegenüber dem Stand der Technik mehr als verdoppelt werden.

Alternativ erfindungsgemäß bevorzugt oder zusätzlich wird innerhalb einer zeitlichen Periode, in der
pro Massenanteil des organischen Lösungsmittels 500 bis 7.500, bevorzugt 1.000 bis 5.000, besonders bevorzugt 1.250 bis 3.000Massenanteile des Polycarbonats gemäß den Schritten (a) bis (d) hergestellt werden,
maximal ein Anteil von 20 %, bevorzugt maximal ein Anteil von 10 Gew.-%, besonders bevorzugt maximal ein Anteil von 5 Gew.-%, ganz besonders bevorzugt maximal ein Anteil von 2 Gew.-%, insbesondere bevorzug maximal ein Anteil von 1 Gew.-%, des organischen Lösungsmittels dem Lösungsmittel entnommen wird und gleichzeitig durch eine dem entnommenen Anteil an organischem Lösemittel einsprechende Menge eines Lösungsmittelgemischs umfassend ein oder mehrere Komponenten ausgewählt aus Methylenchlorid, Chlorbenzol und Chloroform ergänzt. Dabei entspricht erfindungsgemäß bevorzugt das Mischungsverhältnis von Methylenchlorid zu Chlorbenzol zu Chloroform des Lösungsmittelgemischs, das wieder hinzugefügt wird, dem Mischungsverhältnis von Methylenchlorid zu Chlorbenzol zu Chloroform des organischen Lösungsmittels, das zu Beginn der zeitlichen Periode vorlag.

Auf diese Weise wird die Zeit zwischen zwei Betriebsstillständen im gegenüber dem Stand der Technik einerseits nochmals vergrößert, andererseits die Menge an ausgetauschten verunreinigtem organischen Lösungsmittel sehr klein gehalten.

Das erfindungsgemäße Verfahren ist in einer bevorzugten Variante dadurch gekennzeichnet, dass nach der Abtrennung des in Schritt (b) erhaltenen Polycarbonats aus dem organischen Lösungsmittel in Schritt (d) das organische Lösungsmittel ohne weitere Aufreinigung wieder Schritt (a) zuführt wird. Insbesondere wird das organische Lösungsmittel nicht einer Aufreinigung durch eine weitere Destillation zur Abtrennung von flüssigen oder gasförmigen Bestandteilen, insbesondere von Tetrachlormethan oder Chlorethan, oder einem anderen Verfahren zur Abtrennung von flüssigen oder gasförmigen Bestandteilen, insbesondere von Tetrachlormethan oder Chlorethan, unterworfen. Möglich ist jedoch eine Reinigung des organischen Lösungsmittels von Feststoffen durch Siebe oder Filter.

Alternativ oder zusätzlich ist das erfindungsgemäße Verfahren weiter dadurch gekennzeichnet, dass in Schritt (a) der molare Überschuss des Carbonylhalogenids gegenüber dem molaren Anteil des einen Diphenols oder der Summe der molaren Anteile der mehreren verschiedenen Diphenole von 8 bis 30 %, bevorzugt von 10 bis 20 %, besonders bevorzugt von 11 bis 14 % beträgt.

Alternativ oder zusätzlich ist das erfindungsgemäße Verfahren dadurch gekennzeichnet, dass in Schritt (a) der Gehalt des Diphenols oder die Summe der Gehalte der mehreren verschiedenen Diphenole in der wässrigen Phase von 10 bis 20 Gew.-%, bevorzugt 14 bis 18 Gew.-%, besonders bevorzugt 15 bis 16 Gew.-% beträgt.

Alternativ oder zusätzlich ist das erfindungsgemäße Verfahren dadurch gekennzeichnet, dass es sich bei der wässrigen Phase um Alkali- oder Erdalkalilauge handelt.

Alternativ oder zusätzlich ist das erfindungsgemäße Verfahren dadurch gekennzeichnet, dass der pH-Wert in Schritt (a) in der wässrigen Phase 10,0 bis 13,0, bevorzugt 11,0 bis 12,0, besonders bevorzugt 11,3 bis 11,8 beträgt.

Alternativ oder zusätzlich ist das erfindungsgemäße Verfahren dadurch gekennzeichnet, dass in Schritt (c) der Gehalt des Polycarbonats in dem organischen Lösungsmittel von 10 bis 30 Gew.-%, bevorzugt 12 bis 25 Gew.-%, besonders bevorzugt 14 bis 20 Gew.-% beträgt.

Alternativ oder zusätzlich ist das erfindungsgemäße Verfahren dadurch gekennzeichnet, dass das Carbonylhalogenid ausgewählt ist aus der Reihe umfassend: ein Carbonyldihalogenid, Diphosgen, Triphosgen, bevorzugt ein Carbonyldihalogenid, besonders bevorzugt Phosgen.

Die nach dem erfindungsgemäßen Verfahren hergestellten Polycarbonate weisen eine genauso gute Eigenfarbe der durch Spritzguss aus diesen Polycarbonaten hergestellten Formkörper aus wie die Eigenfarbe von Spritzkörpern aus Polycarbonaten, die mit Verfahren nach den Stand der Technik hergestellt wurden. Diese Eigenfarbe der transparenten spritzfrischen Formkörper ist gekennzeichnet durch einen sehr geringen Gelbwert, der durch den sog. "Yellowness-Index" (Y.I.) nach ASTM E313 an spritzgegossenen Platten definierter Dicke bestimmt wird. Alle Angaben zum Y.I. der Polycarbonate beziehen sich auf diese Bestimmungsmethode. Die YI-Werte der erfindungsgemäß hergestellten Polycarbonate liegen maximal bei 2,0, vorzugsweise maximal bei 1,5.

Auch weisen die nach dem erfindungsgemäßen Verfahren hergestellten Polycarbonate genauso gute und normgerechte relative Lösungsviskositäten auf wie mit Verfahren nach dem Stand der Technik hergestellte Polycarbonate. Diese relativen Lösungsviskositäten liegen normgerecht im Bereich von 15 bis 40, bevorzugt von 20 bis 35. Die relative Lösungsviskosität wurde dabei ermittelt durch Messung mit einem Lauda Ubbelohde Viskosimeter Typ Proline PV24 bei 25°C in CH₂Cl₂ und einer Konzentration von 0,5 g Polycarbonat pro 100 ml CH₂Cl₂.

Weiterer Gegenstand der vorliegenden Erfindung ist daher auch ein Polycarbonat, dass noch dem erfindungsgemäßen Verfahren hergestellt wurde. Dieses Polycarbonat zeichnet sich unter anderem dadurch aus, dass es einen YI-Wert von maximal 2,0, bevorzugt von maximal 1,5 aufweist. Auch zeichnet sich das erfindungsgemäße Polycarbonat dadurch aus, dass es relative Lösungsviskositäten von 15 bis 40, bevorzugt von 20 bis 35 aufweist.

Weiterer Gegenstand der Erfindung ist auch ein organisches Lösungsmittel, dass für die Durchführung des erfindungsgemäßen Verfahrens geeignet ist. Dieses organische Lösungsmittel weist folgende Komponenten auf:

| | |
|---|---|
| Methylenchlorid | 0 bis 99,65 Gew.-%, |
| Chlorbenzol | 0 bis 99,65 Gew-% |
| Chloroform | 0 bis 99,65 Gew-% |
| Chlorethan | 0,3 bis 10 Gew.-%, |
| Tetrachlormethan | 0,05 bis 7,0 Gew.-%, |
| sonstige Komponenten | 0 bis 2,0 Gew.-%, |

wobei die Summe der Gehalte von Methylenchlorid, Chlorbenzol und Chloroform mindestens 81,00 Gew.-% und höchstens 99,65 Gew.-% beträgt,
und wobei Summe der Gehalte von Methylenchlorid, Chlorbenzol und Chloroform vermehrt um die Summe der Gehalte von Chlorethan, Tetrachlormethan und der sonstigen Komponenten 100 Gew.-% beträgt. Dabei ist in dem organischen Lösungsmittel immer mindestens eine Komponente ausgewählt aus den Komponenten Methylenchlorid, Chlorbenzol und Chloroform enthalten.

Die Summe der Gehalte von Chlorethan, Tetrachlormethan und sonstigen Komponenten im organischen Lösungsmittel beträgt also mindestens 0,35 Gew.-% und höchstens 19,0 Gew.-%.

Erfindungsgemäß bevorzugt beträgt der Gehalt an Methylenchlorid gegenüber der Summe der Gehalte von Chlorbenzol und Chloroform wenigstens 98,0 Gew.-% bis 99,999 Gew.-%, bevorzugt 99,0 Gew.% bis 99,995 Gew.-%.

Alternativ erfindungsgemäß bevorzugt beträgt die Summe der Gehalte an Methylenchlorid und Chlorbenzol gegenüber dem Gehalt von Chloroform wenigstens 98,0 Gew.-% bis 99,999 Gew.-%, bevorzugt 99,0 Gew.% bis 99,995 Gew.-%.

Dabei ist das Verhältnis des Gehalts an Methylenchlorid gegenüber dem Gehalt an Chlorbenzol von 40 Gew.-% Methylenchlorid zu 60 Gew.-% Chlorbenzol bis 60 Gew.-% Methylenchlorid zu 40 Gew.-% Chlorbenzol,
bevorzugt 45 Gew.-% Methylenchlorid zu 55 Gew.-% Chlorbenzol bis 55 Gew.-% Methylenchlorid zu 45 Gew.-% Chlorbenzol,
besonders bevorzugt 48 Gew.-% Methylenchlorid zu 52 Gew.-% Chlorbenzol bis 52 Gew.-% Methylenchlorid zu 48 Gew.-% Chlorbenzol,
ganz besonders bevorzugt 49 Gew.-% Methylenchlorid zu 51 Gew.-% Chlorbenzol bis 51 Gew.-% Methylenchlorid zu 49 Gew.-% Chlorbenzol,
insbesondere 50 Gew.-% Methylenchlorid zu 50 Gew.-% Chlorbenzol.

Außerdem erfindungsgemäß bevorzugt beträgt der Gehalt von Chlorethan im organischen Lösungsmittel von 0,9 Gew.-% bis 8,0 Gew.-%, bevorzugt von 2,0 Gew-% bis 7,0 Gew.-%, besonders bevorzugt von 2,5 Gew.-% bis 6,0.

Zusätzlich erfindungsgemäß bevorzugt beträgt der Gehalt von Tetrachlormethan im organischen Lösungsmittel von 0,2 Gew.-% bis 7,0 Gew.-%, bevorzugt von 0,5 bis 6,0 Gew.-%, besonders bevorzugt von 1,0 Gew.-% bis 4,0 Gew.-%.

Insbesondere erfindungsgemäß bevorzugt beträgt im organischen Lösungsmittel der Gehalt von Chlorethan von 0,9 Gew.-% bis 8,0 Gew.-% und der Gehalt von Tetrachlormethan von 0,2 Gew.-% bis 7,0 Gew.-%,
bevorzugt der Gehalt von Chlorethan von 2,0 Gew-% bis 7,0 Gew.-% und der Gehalt von Tetrachlormethan von 0,5 bis 6,0 Gew.-%,
besonders bevorzugt der Gehalt von Chlorethan von 2,5 Gew.-% bis 6,0 Gew.-% und der Gehalt von Tetrachlormethan von 1,0 Gew.-% bis 4,0 Gew.-%.

Für alle vorgenannten Fälle gilt, dass die Summe der Gehalte von Methylenchlorid, Chlorbenzol und Chloroform vermehrt um die Summe der Gehalte von Chlorethan, Tetrachlormethan und der sonstigen Komponenten 100 Gew.-% beträgt.

Ein solches organisches Lösungsmittel ist ohne aufwendige Reinigung verfügbar und billiger als organische Lösungsmittel mit geringeren Gehalten an Chlorethan oder Tetrachlormethan. Es eignet sich aber genauso wie organische Lösungsmittel mit geringeren Gehalten an Chlorethan oder Tetrachlormethan für die Herstellung von Polycarbonaten mit guten optischen Eigenschaften, insbesondere von Polycarbonaten mit einem YI-Wert von maximal 2,0, bevorzugt von maximal 1,5.

Weiterer Gegenstand der Erfindung ist auch die Verwendung des erfindungsgemäßen organischen Lösungsmittels zur Herstellung von Polycarbonaten nach dem Phasengrenzflächenverfahren.

Die vorliegende Erfindung wird nachfolgend anhand von Beispielen verdeutlich, ohne dass die Erfindung auf diese Beispiele eingeschränkt werden soll.

Die hier beschriebenen Versuche wurden in einer kontinuierlich betriebenen Anlage zur Herstellung von Polycarbonat nach dem Phasengrenzflächenverfahren durchgeführt.

### Beispiele 1-2, kontinuierliche Laborherstellung von Polycarbonat

Die Laborversuche wurden in kontinuierlicher Fahrweise in einer Kombination von Pumpen und gerührten Reaktoren durchgeführt. Bei allen Experimenten wurden 65,8 g/h gasförmiges Phosgen in einen T-Stück in 772 g/h organischem Lösungsmittel (Zusammensetzung siehe Tabelle 1) bei -7 °C gelöst. Die Menge an Lösungsmittel wurde so berechnet, dass am Ende der Reaktion eine 15 Gew.-%ige Polycarbonatlösung erhalten wurde. Die kontinuierlich zugeführte Phosgenlösung wurde in einem weiterem T-Stück mit 912 g/h 15 gew.-%iger wässriger, alkalischer BPA-Lösung (2 Mol NaOH pro Mol BPA) in Kontakt gebracht, die bei 30 °C vorgewärmt war. Diese BPA-Lösung wurde durch ein Edelstahlfilter (Porengröße von 60 µm) in der Phosgenlösung dispergiert. Das Reaktionsgemisch wurde in eine Fink HMR040 Mischpumpe geleitet, die bei 25 °C temperiert wurde, bis das das Phosgen am Ende der Reaktionspumpe komplett abreagiert war. Nach dieser Pumpe wurden 3,29 g/h p-tert.-Butylphenol als Kettenabbrecher als 3 gew.-%ige Lösung im oben genanntem Lösungsmittelgemisch zudosiert und in einer weiteren HMR040 Pumpe bei 25°C mit 28,32 g/h. 32 gew.-%iger Natronlauge weiterreagiert.

Dann folgten zwei überflutet gefahrene Glasrührkessel aus der Werkstatt der Tectrion GmbH mit Strömungsbrechern aus Edelstahl mit 600 Sekunden Verweilzeit und entsprechend zwei Zahnradpumpen zur Förderung und Dispergierung des Reaktionsgemischs. Im zweitem Rührkessel wurden 0,679 g/h des Katalysators dosiert (10 gew-%ige N-Ethylpiperidin, gelöst in reinem Chlorbenzol). Am Ende der Reaktion lag der pH-Wert der Reaktion bei ca. 11,5.

Auf diese Weise wurden kontinuierlich 156 g/h Polycarbonat in organischer Lösung zusammen mit der wässriger Phase aus der Reaktion zu einem Phansentrenngefäß geführt, um diese wässriger Phase abzutrennen. Die Polycarbonatlösung wurde mit 10 gew.-%iger HCl gewaschen und anschließend getrocknet.

Das erhaltene Polycarbonat hatte folgende Kennzahlen: relative Lösungsviskosität 27 / phenolische OH-Endgruppen 155 [ppm] / DPC < 2 [ppm] / BPA 2 [ppm] / Phenol < 2 [ppm]. Die Reaktivität des Systems wird an der Restmenge an freiem Bisphenol A und der Effizienz des End-cappings (phenolisches OH) bestimmt. Es konnte keinerlei Einfluss von der Lösungsmittelzusammensetzung auf diese Qualitätsparameter festgestellt werden.

In Tabelle1 sind die YI-Werte der Polycarbonate in Abhängigkeit von den bei der Herstellung der Polycarbonate verwendeten organischen Lösungsmittel aufgeführt.

### Beispiele 3-9, kontinuierliche Herstellung von Polycarbonat

Zur Bestimmung der Wirkung des Lösungsmittels sowie des Ablaufs der Verfahrensführung analog den zuvor beschriebenen Bedingungen wurden weitere Versuche in mehreren großtechnischen Anlagen durchgeführt und sowohl die Verfahrensstabilität als auch die Produktqualität bestimmt.

Als wässrige Phase für die Beispiele 3 - 9 wurde eine wässrige BPA-Lösung verwendet mit einem Molverhältnis NaOH / BPA von 2,03. Als Lösungsmittel für die organische Phase wurde jeweils ein Gemisch wie angegeben in Tabelle 2 verwendet, dem Phosgen zugegeben wurde. Die Reaktionspartner wurden durch eine Düse dispergiert, wobei die Voreinstellung der Düse die zur Herstellung einer Öl-in-Wasser-Dispersion war. Die Reaktionstemperatur wurde mittels eines Kühlers in der Umpumpschleife eines Tankreaktors auf 40 °C eingestellt und mit Hilfe einer NaOH-Dosierung in einem Verweilreaktor wurde der pH-Wert so eingestellt, dass er am Ende des Reaktion 11,5 betrug. Die Kettenlänge wurde durch Dosierung von p-tert.Butyl-phenol in einem ersten Verweilreaktor eingestellt und um Restmengen an reaktiven Chlorendgruppen abzureagieren, wurde N-Ethylpiperidin als Katalysator in einem zweiten Verweilreaktor zugegeben. Zwecks Vergleichbarkeit der Versuche auf technischen Anlagen unterschiedlicher Größen werden die Dosiermengen pro 10.000 kg Bisphenolatlösung angegeben.

Es wurde mit den folgenden Lösungen gearbeitet:
wässrige Bisphenolatlösung (15,55 Gew.-% BPA bezogen auf Gesamtgewicht der Lösung, 2,03 mol Natronlauge / mol BPA);
32 Gew-% wässrige NaOH Lösung;
15 Gew-% p-tert.Butylphenollösung im Lösemittelgemisch aus Tabelle 2,
als Katalysatorlösung: 7,5 Gew-% N-Ethylpipiridin in Methylenchlorid.

Die Dosiermengen waren typischerweise wie folgt:
- 10.000 kg BPA-Lösung,
- 767 kg Phosgen,
- 7960 kg Lösungsmittel,
- 465 kg NaOH Lösung,
- 286 kg p-tert.-Butylphenollösung,
- 182 kg N-Ethylpiperidinlösung.

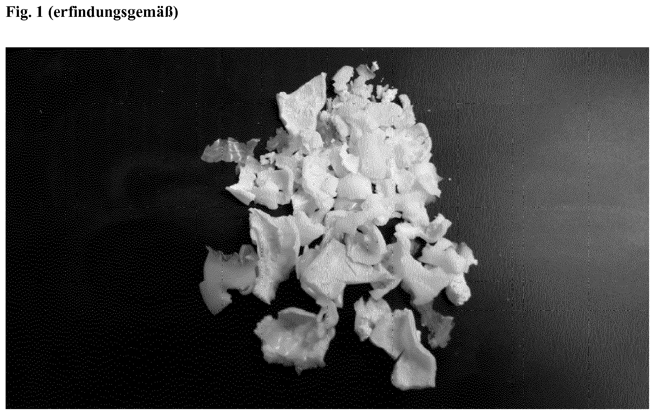

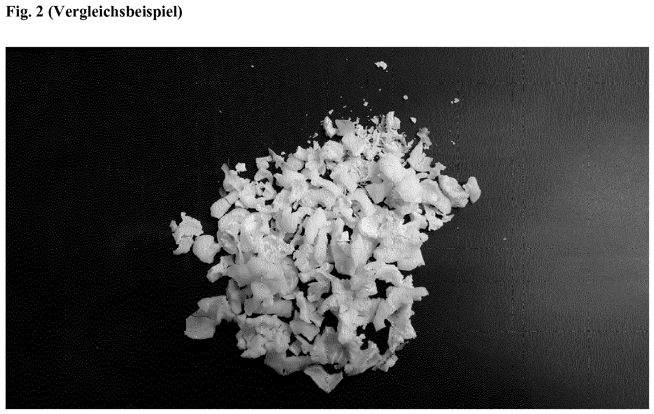

Es ist deutlich zu erkennen, dass das erfindungsgemäß hergestellte Polycarbonat ausgezeichnete YI-Werte aufweist. Die Laborproben aus den Beispiele 1 und 2 wurden visuell beobachtet und sind in Figuren 1 und 2 dargestellt.

**Tabelle 1:**

| **Beispiel** | **Chlorbenzol (Gew%)** | **Methylenchlorid (Gew%)** | **Chlorethan (Gew%)** | **Tetrachlorkohlenstoff (Gew%)** | **Optische Qualität** | **BPA (ppm)** | **OH (ppm)** |
|---|---|---|---|---|---|---|---|
| 1 | 50,00 | 50,00 | 0,00 | 0,00 | Visuell | <2 | 155 |
| 2 | 45,00 | 45,00 | 6,00 | 4,00 | Visuell | <2 | 150 |

**Tabelle 2:**

| **Beispiel** | **Chlorbenzol (Gew%)** | **Methylenchlorid (Gew%)** | **Chlorethan (Gew%)** | **Tetrachlorkohlenstoff (Gew%)** | **YI** | **BPA (ppm)** | **OH (ppm)** |
|---|---|---|---|---|---|---|---|
| 3 | 49,44 | 49,44 | 1,07 | 0,05 | 1,03 | 5 | 127 |
| 4 | 49,43 | 49,43 | 1,06 | 0,08 | 0,91 | 3 | 103 |
| 5 | 49,56 | 49,56 | 0,82 | 0,31 | 0,76 | 7 | 122 |
| 6 | 49,60 | 49,60 | 2,37 | 0,59 | 1,24 | 4 | 140 |
| 7 | 49,57 | 49,58 | 2,20 | 0,64 | 1,05 | 5 | 111 |
| 8 | 44,06 | 54,11 | 1,22 | 0,61 | 1,13 | 4 | 87 |
| 9 | 43,10 | 55,20 | 1,50 | 0,20 | 1,31 | <2 | 48 |

## Patentansprüche

1. Verfahren zur Herstellung eines Polycarbonats nach dem Phasengrenzflächenverfahren, das wenigstens folgende Schritte umfasst:
(a) Lösen eines Diphenols oder mehrerer verschiedener Diphenole in einer wässriger Phase und Lösen eines Carbonylhalogenids in einem organischen Lösungsmittel,
(b) Umsetzung des in der wässrigen Phase gelösten Diphenols oder der in der wässrigen Phase gelösten mehreren verschiedenen Diphenole mit dem in dem organischen Lösungsmittel gelösten Carbonylhalogenid zu einem in dem organischen Lösungsmittel gelösten Polycarbonat,
(c) Zuführung dieses in dem organischen Lösungsmittel gelösten Polycarbonats zu Schritt (d),
(d) Abtrennung des in Schritt (b) erhaltenen Polycarbonats vom organischen Lösungsmittel und Rückführung des organischen Lösungsmittels zu Schritt (a),
wobei das organische Lösungsmittel folgende Komponenten enthält:
| | |
|---|---|
| Methylenchlorid | 0 bis 99,65 Gew.-%, |
| Chlorbenzol | 0 bis 99,65 Gew-% |
| Chloroform | 0 bis 99,65 Gew-% |
| Chlorethan | 0,3 bis 10 Gew.-%, |
| Tetrachlormethan | 0,05 bis 7,0 Gew.-%, |
| sonstige Komponenten | 0 bis 2,0 Gew.-%, |
wobei die Summe der Gehalte von Methylenchlorid, Chlorbenzol und Chloroform mindestens 81,00 Gew.-% und höchstens 99,65 Gew.-% beträgt,
und wobei Summe der Gehalte von Methylenchlorid, Chlorbenzol und Chloroform vermehrt um die Summe der Gehalte von Chlorethan, Tetrachlorethan und der sonstigen Komponenten 100 Gew.-% beträgt.

2. Verfahren nach Anspruch 1, **dadurch gekennzeichnet, dass** der Gehalt von Chlorethan im organischen Lösungsmittel von 0,9 Gew.-% bis 8,0 Gew.-%, bevorzugt von 2,0 Gew-% bis 7,0 Gew.-%, besonders bevorzugt von 2,5 Gew.-% bis 6,0 Gew.-% beträgt.

3. Verfahren nach Anspruch 1 oder 2, **dadurch gekennzeichnet, dass** der Gehalt von Tetrachlormethan im organischen Lösungsmittel von 0,2 Gew.-% bis 7,0 Gew.-%, bevorzugt von 0,5 bis 6,0 Gew.-%, besonders bevorzugt von 1,0 Gew.-% bis 4,0 Gew.-% beträgt.

4. Verfahren nach Anspruch 2 oder 3, **dadurch gekennzeichnet, dass** im organischen Lösungsmittel
der Gehalt von Chlorethan von 0,9 Gew.-% bis 8,0 Gew.-% und der Gehalt von Tetrachlormethan von 0,2 Gew.-% bis 7,0 Gew.-% beträgt,
bevorzugt der Gehalt von Chlorethan von 2,0 Gew-% bis 7,0 Gew.-% und der Gehalt von Tetrachlormethan von 0,5 bis 6,0 Gew.-% beträgt,
besonders bevorzugt der Gehalt von Chlorethan von 2,5 Gew.-% bis 6,0 Gew.-% und der Gehalt von Tetrachlormethan von 1,0 Gew.-% bis 4,0 Gew.-% beträgt.

5. Verfahren nach einem der Ansprüche 1 bis 4, **dadurch gekennzeichnet, dass** in Schritt (d) das organische Lösungsmittel und das erhaltenen Polycarbonat dadurch voneinander getrennt werden, dass das erhaltene, in dem organische Lösungsmittel gelöste Polycarbonat in ein weiteres Lösungsmittel gegeben wird, wobei das erhaltene Polycarbonat in diesem weiteren Lösungsmittel schlechter löslich ist als in dem organischen Lösungsmittel.

6. Verfahren nach einem der Ansprüche 1 bis 4, **dadurch gekennzeichnet, dass** in Schritt (d) das organische Lösungsmittel durch mehrstufiges Aufheizen und Entspannen abgetrennt wird, gegebenenfalls in Kombination mit Ausdampfextrudern und/oder Strangverdampfern und/oder Schaumverdampfern.

7. Verfahren nach einem der Ansprüche 1 bis 4, **dadurch gekennzeichnet, dass** in Schritt (d) das organische Lösungsmittel durch Sprühtrocknen mit einem Schleppgas, insbesondere Dampf oder Stickstoff, abgetrennt wird.

8. Verfahren nach einem der vorhergehenden Ansprüche, **dadurch gekennzeichnet, dass** das organische Lösungsmittel nach der Abtrennung in Schritt (d) ohne weitere Abtrennung von flüssigen oder gasförmigen Bestandteilen wieder Schritt (a) zugeführt wird.

9. Verfahren nach einem der vorhergehenden Ansprüche, **dadurch gekennzeichnet, dass** aus dem organischen Lösungsmittel nach der Abtrennung in Schritt (d) nur Komponenten entfernt werden, die einen Siedepunkt größer 135 °C bei Normaldruck (1013,25 hPa) aufweisen, ohne Abtrennung von Komponenten, die einen Siedepunkt von kleiner oder gleich 135 °C bei Normaldruck (1013,25 hPa) aufweisen, wobei die Komponenten, die einem Siedepunkt von kleiner oder gleich 135 °C bei Normaldruck (1013,25 hPa) aufweisen, wieder Schritt (a) zugeführt werden.

10. Verfahren nach einem der vorhergehenden Ansprüche, **dadurch gekennzeichnet, dass** das organische Lösungsmittel in einem in Bezug auf dieses Lösungsmittel geschlossenen Kreislauf geführt wird, wobei die Menge des organischen Lösungsmittels während der Durchführung des Verfahrens nicht vermehrt wird,
wobei erst nach einer zeitlichen Periode, in der
pro Massenanteil des organischen Lösungsmittels 500 bis 7500, bevorzugt 1.000 bis 5.000, besonders bevorzugt 1.250 bis 3.000, Massenanteile des Polycarbonats gemäß den Schritten (a) bis (d) hergestellt werden,
100 % oder weniger, bevorzugt 70 % oder weniger, besonders bevorzugt 50 % oder weniger, ganz besonders bevorzugt 30 % oder weniger des organischen Lösungsmittels ersetzt oder aufgereinigt werden.

11. Verfahren nach einem der vorhergehenden Ansprüche, **dadurch gekennzeichnet, dass** das organische Lösungsmittel in einem in Bezug auf dieses Lösungsmittel geschlossenen Kreislauf geführt wird, wobei die Menge des organischen Lösungsmittels während der Durchführung des Verfahrens nicht vermehrt wird,
wobei innerhalb einer zeitlichen Periode, in der
pro Massenanteil des organischen Lösungsmittels 500 bis 7500, bevorzugt 1.000 bis 5.000, besonders bevorzugt 1.250 bis 3.000, Massenanteile des Polycarbonats gemäß den Schritten (a) bis (d) hergestellt werden,
maximal ein Anteil von 20 %, bevorzugt maximal ein Anteil von 10 %, besonders bevorzugt maximal ein Anteil von 5 %, ganz besonders bevorzugt maximal ein Anteil von 2 %, insbesondere maximal ein Anteil von 1 Gew.-%, des organischen Lösungsmittels dem Lösungsmittel entnommen wird und gleichzeitig durch eine dem entnommenen Anteil an organischem Lösemittelgemisch entsprechende Menge eines Lösungsmittelgemischs umfassend ein oder mehrere Komponenten ausgewählt aus Methylenchlorid, Chlorbenzol und Chloroform ergänzt wird.

12. Organisches Lösungsmittel, geeignet zur Herstellung von Polycarbonaten nach einem der Ansprüche 1 bis 11, **dadurch gekennzeichnet, dass** es folgende Komponenten aufweist:
| | |
|---|---|
| Methylenchlorid | 0 bis 99,65 Gew.-%, |
| Chlorbenzol | 0 bis 99,65 Gew-% |
| Chloroform | 0 bis 99,65 Gew-% |
| Chlorethan | 0,3 bis 10 Gew.-%, |
| Tetrachlormethan | 0,05 bis 7,0 Gew.-%, |
| sonstige Komponenten | 0 bis 2,0 Gew.-%, |
wobei die Summe der Gehalte von Methylenchlorid, Chlorbenzol und Chloroform mindestens 81,00 Gew.-% und höchstens 99,65 Gew.-% beträgt,
und wobei Summe der Gehalte von Methylenchlorid, Chlorbenzol und Chloroform vermehrt um die Summe der Gehalte von Chlorethan, Tetrachlorethan und der sonstigen Komponenten 100 Gew.-% beträgt.

13. Verwendung eines organischen Lösungsmittel nach Anspruch 12 zur Herstellung von Polycarbonaten nach dem Phasengrenzflächenverfahren.

## Claims

1. Process for producing a polycarbonate by the interfacial process comprising at least the following steps:
(a) dissolving a diphenol or two or more different diphenols in an aqueous phase and dissolving a carbonyl halide in an organic solvent,
(b) reacting the diphenol dissolved in the aqueous phase or the two or more different diphenols dissolved in the aqueous phase with the carbonyl halide dissolved in the organic solvent to afford a polycarbonate dissolved in the organic solvent,
(c) supplying this polycarbonate dissolved in the organic solvent to step (d),
(d) removing the polycarbonate obtained in step (b) from the organic solvent and recycling the organic solvent to step (a),
wherein the organic solvent comprises the following components:
| | |
|---|---|
| methylene chloride | 0% to 99.65% by weight, |
| chlorobenzene | 0% to 99.65% by weight, |
| chloroform | 0% to 99.65% by weight, |
| chloroethane | 0.3% to 10% by weight, |
| tetrachloromethane | 0.05% to 7.0% by weight, |
| other components | 0% to 2.0% by weight, |
wherein the sum of the contents of methylene chloride, chlorobenzene and chloroform is at least 81.00% by weight and at most 99.65% by weight and wherein the sum of the contents of methylene chloride, chlorobenzene and chloroform plus the sum of the contents of chloroethane, tetrachloroethane and the other components is 100% by weight.

2. Process according to Claim 1, **characterized in that** the content of chloroethane in the organic solvent is from 0.9% by weight to 8.0% by weight, preferably from 2.0% by weight to 7.0% by weight, particularly preferably from 2.5% by weight to 6.0% by weight.

3. Process according to Claim 1 or 2, **characterized in that** the content of tetrachloromethane in the organic solvent is from 0.2% by weight to 7.0% by weight, preferably from 0.5% by weight to 6.0% by weight, particularly preferably from 1.0% by weight to 4.0% by weight.

4. Process according to Claim 2 or 3, **characterized in that** in the organic solvent
the content of chloroethane is from 0.9% by weight to 8.0% by weight and the content of tetrachloromethane is from 0.2% by weight to 7.0% by weight,
preferably the content of chloroethane is from 2.0% by weight to 7.0% by weight and the content of tetrachloromethane is from 0.5% to 6.0% by weight, particularly preferably the content of chloroethane is from 2.5% by weight to 6.0% by weight and the content of tetrachloromethane is from 1.0% by weight to 4.0% by weight.

5. Process according to any of Claims 1 to 4, **characterized in that** in step (d) the organic solvent and the obtained polycarbonate are separated from one another when the obtained polycarbonate dissolved in the organic solvent is added to a further solvent, wherein the obtained polycarbonate has poorer solubility in this further solvent than in the organic solvent.

6. Process according to any of Claims 1 to 4, **characterized in that** in step (d) the organic solvent is removed by multi-stage heating and decompression, optionally in combination with vented extruders and/or extrudate evaporators and/or foam evaporators.

7. Process according to any of Claims 1 to 4, **characterized in that** in step (d) the organic solvent is removed by spray drying with a carrier gas, in particular steam or nitrogen.

8. Process according to any of the preceding claims, **characterized in that** after the removal in step (d) the organic solvent is sent back to step (a) without further removal of liquid or gaseous constituents.

9. Process according to any of the preceding claims, **characterized in that** after the removal in step (d) only components having a boiling point greater than 135°C at standard pressure (1013.25 hPa) are removed from the organic solvent without removal of components having a boiling point of less than or equal to 135°C at standard pressure (1013.25 hPa), wherein the components having a boiling point of less than or equal to 135°C at standard pressure (1013.25 hPa) are sent back to step (a).

10. Process according to any of the preceding claims, **characterized in that** the organic solvent is recycled in a circuit that is closed in respect of this solvent, wherein the amount of the organic solvent is not increased during performance of the process,
wherein 100% or less, preferably 70% or less, particularly preferably 50% or less, very particularly preferably 30% or less of the organic solvent is replaced or purified only after a time period in which per part by mass of organic solvent
500 to 7500, preferably 1000 to 5000, particularly preferably 1250 to 3000, parts by mass of the polycarbonate are produced according to steps (a) to (d).

11. Process according to any of the preceding claims, **characterized in that** the organic solvent is recycled in a circuit that is closed in respect of this solvent, wherein the amount of the organic solvent is not increased during performance of the process,
wherein not more than a proportion of 20%, preferably not more than a proportion of 10%, particularly preferably not more than a proportion of 5%, very particularly preferably not more than a proportion of 2%, in particular not more than a proportion of 1%, by weight,
of the organic solvent is removed from the solvent and is simultaneously replenished with an amount of a solvent mixture corresponding to the removed proportion of organic solvent mixture and comprising one or more components selected from methylene chloride, chlorobenzene and chloroform over a time period in which per part by mass of organic solvent 500 to 7500, preferably 1000 to 5000, particularly preferably 1250 to 3000, parts by mass of the polycarbonate are produced according to steps (a) to (d).

12. Organic solvent suitable for producing polycarbonates according to any of Claims 1 to 11, **characterized in that** the organic solvent has the following components:
| | |
|---|---|
| methylene chloride | 0% to 99.65% by weight, |
| chlorobenzene | 0% to 99.65% by weight, |
| chloroform | 0% to 99.65% by weight, |
| chloroethane | 0.3% to 10% by weight, |
| tetrachloromethane | 0.05% to 7.0% by weight, |
| other components | 0% to 2.0% by weight, |
wherein the sum of the contents of methylene chloride, chlorobenzene and chloroform is at least 81.00% by weight and at most 99.65% by weight and wherein the sum of the contents of methylene chloride, chlorobenzene and chloroform plus the sum of the contents of chloroethane, tetrachloroethane and the other components is 100% by weight.

13. Use of an organic solvent according to Claim 12 for producing polycarbonates by the interfacial process.

## Revendications

1. Procédé pour la préparation d'un polycarbonate selon le procédé interfacial, qui comprend au moins les étapes suivantes :
(a) dissolution d'un diphénol ou de plusieurs diphénols différents dans une phase aqueuse et dissolution d'un halogénure de carbonyle dans un solvant organique,
(b) transformation du diphénol dissous dans la phase aqueuse ou des plusieurs diphénols différents dissous dans la phase aqueuse avec l'halogénure de carbonyle dissous dans le solvant organique en un polycarbonate dissous dans le solvant organique,
(c) introduction de ce polycarbonate dissous dans le solvant organique dans l'étape (d),
(d) séparation du polycarbonate obtenu dans l'étape (b) du solvant organique et recyclage du solvant organique dans l'étape (a),
le solvant organique contenant les composants suivants :
| | |
|---|---|
| chlorure de méthylène | 0 à 99,65% en poids, |
| chlorobenzène | 0 à 99,65% en poids |
| chloroforme | 0 à 99,65% en poids |
| chloroéthane | 0,3 à 10% en poids |
| tétrachlorométhane | 0,05 à 7,0% en poids, |
| autres composants | 0 à 2,0% en poids |
la somme des teneurs en chlorure de méthylène, en chlorobenzène et en chloroforme valant au moins 81,00% en poids et au plus 99,65% en poids et la somme des teneurs en chlorure de méthylène, en chlorobenzène et en chloroforme augmentée de la somme des teneurs en chloroéthane, en tétrachloroéthane et en autres composants valant 100% en poids.

2. Procédé selon la revendication 1, **caractérisé en ce que** la teneur en chloroéthane dans le solvant organique est de 0,9% en poids à 8,0% en poids, de préférence de 2,0% en poids à 7,0% en poids et de manière particulièrement préférée de 2,5% en poids à 6,0% en poids.

3. Procédé selon la revendication 1 ou 2, **caractérisé en ce que** la teneur en tétrachlorométhane dans le solvant organique est de 0,2% en poids à 7,0% en poids, de préférence de 0,5% en poids à 6,0% en poids et de manière particulièrement préférée de 1,0% en poids à 4,0% en poids.

4. Procédé selon la revendication 2 ou 3, **caractérisé en ce que**, dans le solvant organique,
la teneur en chloroéthane est de 0,9% en poids à 8,0% en poids et la teneur en tétrachlorométhane est de 0,2% en poids à 7,0% en poids,
de préférence la teneur en chloroéthane est de 2,0% en poids à 7,0% en poids et la teneur en tétrachlorométhane est de 0,5 à 6,0% en poids,
de manière particulièrement préférée la teneur en chloroéthane est de 2,5% en poids à 6,0% en poids et la teneur en tétrachlorométhane est de 1,0% en poids à 4,0% en poids.

5. Procédé selon l'une quelconque des revendications 1 à 4, **caractérisé en ce que**, dans l'étape (d), le solvant organique et le polycarbonate obtenu sont séparés l'un de l'autre **en ce que** le polycarbonate obtenu, dissous dans le solvant organique, est introduit dans un autre solvant, le polycarbonate obtenu étant moins soluble dans cet autre solvant que dans le solvant organique.

6. Procédé selon l'une quelconque des revendications 1 à 4, **caractérisé en ce que**, dans l'étape (d), le solvant organique est séparé par chauffage et détente en plusieurs étapes, le cas échéant en combinaison avec des extrudeuses d'évaporation et/ou des évaporateurs à tubes et/ou des évaporateurs à mousse.

7. Procédé selon l'une quelconque des revendications 1 à 4, **caractérisé en ce que**, dans l'étape (d), le solvant organique est séparé par séchage par pulvérisation à l'aide d'un gaz vecteur, en particulier de la vapeur ou de l'azote.

8. Procédé selon l'une quelconque des revendications précédentes, **caractérisé en ce que**, après la séparation dans l'étape (d), le solvant organique est de nouveau introduit dans l'étape (a) sans autre séparation de constituants liquides ou gazeux.

9. Procédé selon l'une quelconque des revendications précédentes, **caractérisé en ce qu'**après la séparation dans l'étape (d), on n'élimine du solvant organique que des composants qui présentent un point d'ébullition supérieur à 135°C à pression normale (1013,25 hPa), sans séparation de composants qui présentent un point d'ébullition inférieur ou égal à 135°C à pression normale (1013,25 hPa), les composants qui présentent un point d'ébullition inférieur ou égal à 135°C à pression normale (1013,25 hPa) étant de nouveau introduits dans l'étape (a).

10. Procédé selon l'une quelconque des revendications précédentes, **caractérisé en ce que** le solvant organique est guidé dans un circuit fermé par rapport à ce solvant, la quantité de solvant organique n'étant pas augmentée pendant la réalisation du procédé,
100% ou moins, de préférence 70% ou moins, de manière particulièrement préférée 50% ou moins, de manière tout particulièrement préférée 30% au moins du solvant organique n'étant remplacés ou purifiés qu'après une période temporelle au cours de laquelle par part massique du solvant organique, 500 à 7500, de préférence 1000 à 5000, de manière particulièrement préférée de 1250 à 3000 parts massiques du polycarbonate sont préparées selon les étapes (a) à (d).

11. Procédé selon l'une quelconque des revendications précédentes, **caractérisé en ce que** le solvant organique est guidé dans un circuit fermé par rapport à ce solvant, la quantité de solvant organique n'étant pas augmentée pendant la réalisation du procédé,
où, dans une période temporelle au cours de laquelle par part massique du solvant organique, 500 à 7500, de préférence 1000 à 5000, de manière particulièrement préférée de 1250 à 3000 parts massiques du polycarbonate sont préparées selon les étapes (a) à (d),
au maximum une part de 20%, de préférence au maximum une part de 10%, de manière particulièrement préférée au maximum une part de 5%, de manière tout particulièrement préférée au maximum une part de 2%, en particulier au maximum une part de 1% en poids du solvant organique est/sont prélevée(s) du solvant organique et simultanément remplacée(s) par une quantité correspondant à la part prélevée de mélange de solvants organiques d'un mélange de solvants comprenant un ou plusieurs composants choisis parmi le chlorure de méthylène, le chlorobenzène et le chloroforme.

12. Solvant organique, approprié pour la préparation de polycarbonates selon l'une quelconque des revendications 1 à 11, **caractérisé en ce qu'**il présente les composants suivants :
| | |
|---|---|
| chlorure de méthylène | 0 à 99,65% en poids, |
| chlorobenzène | 0 à 99,65% en poids |
| chloroforme | 0 à 99,65% en poids |
| chloroéthane | 0,3 à 10% en poids |
| tétrachlorométhane | 0,05 à 7,0% en poids, |
| autres composants | 0 à 2,0% en poids |
la somme des teneurs en chlorure de méthylène, en chlorobenzène et en chloroforme valant au moins 81,00% en poids et au plus 99,65% en poids et la somme des teneurs en chlorure de méthylène, en chlorobenzène et en chloroforme augmentée de la somme des teneurs en chloroéthane, en tétrachloroéthane et en autres composants valant 100% en poids.

13. Utilisation d'un solvant organique selon la revendication 12 pour la préparation de polycarbonates selon le procédé interfacial.
